# EUROPÄISCHE PATENTANMELDUNG

(11) **EP 1 524 439 A2**
(43) Veröffentlichungstag der Anmeldung: **20.04.2005**
(21) Anmeldenummer: 04024330.5
(22) Anmeldetag: 13.10.2004
(51) Int. Cl.: F16B 12/46

(54) **Feststeller für eingenutete Rückwände an Kastenmöbeln**

(30) Priorität: 16.10.2003 DE 10348264
(71) Anmelder: CS Schmalmöbel GmbH & Co. KG, 66914 Waldmohr (DE)
(72) Erfinder: Hirnsberger, Thomas, 66578 Schiffweiler (DE); Ruppert, Stefan, 66424 Homburg (DE); Müürmann, Edwin, 66914 Waldmohr (DE)
(74) Vertreter: Elbertzhagen, Otto, Dipl.-Ing.

(57) **Zusammenfassung**

Ein Feststeller für eingenutete Rückwände an Kastenmöbeln hat zumindest ein im Winkelbereich zwischen der Rückwand sowie einer genuteten Seitenwand und zumindest ein weiteres im Winkelbereich zwischen der Rückwand sowie einem genuteten Boden und/oder Oberboden ansetzbares Stützelement. Die Stützelemente (10) weisen jeweils rechtwinklig zueinander stehende Anlageseiten und diagonal zu diesen Anlageseiten ein Durchgangsloch (12) zur Aufnahme einer Fixierschraube oder eines Fixierstiftes auf. Zwecks einfacherer Handhabung und sichererer Fixierung der im Eckbereich jeweils unter einem Winkel von 90 Grad zueinander miteinander zu verbindenden Kastenmöbelelemente sind die zumindest zwei Stützelemente (10) einstückig in zwei im rechten Winkel zueinander stehende Schenkel (2) eines Eckwinkels integriert. Hierbei ist an jedem Schenkel (2) des Eckwinkels wenigstens eines der Stützelemente (10) ausgebildet.

## Beschreibung

Die Erfindung bezieht sich auf einen Feststeller der im Oberbegriff des Patentanspruchs 1 näher bezeichneten Art.

In bekannter Ausführung sind solche Feststeller Einzelelemente in Gestalt kleiner Böckchen oder Konsolen, die man im rückwärtigen Inneneckenbereich zwischen der Rückwand und der dahinter verbleibenden Brüstung der Seitenwände und der Böden ansetzt, um sie mittels einer Schraube oder eines Nagels, die durch das diagonale Durchgangsloch einzubringen sind, zu befestigen. Dadurch werden die Rückwand sowie der betreffende Boden oder Oberboden und die jeweilige Seitenwand eines Kastenmöbels in einem Winkel von 90 Grad zueinander fixiert.

Die Handhabung solcher kleinteiligen Feststeller ist schwierig, und es besteht die Gefahr, daß bei nicht richtig angesetztem Feststeller beim Einbringen der Fixierschraube oder Einschlagen des Fixiernagels die rückwärtige Brüstung an dem jeweiligen Boden oder der Seitenwand des Kastenmöbels wegbricht. Da die Nuten an den Seitenwänden und den Böden des Kastenmöbels in aller Regel um ein Spielmaß weiter ausgeführt werden als die aufzunehmende Rückwand dick ist, besteht weiter die Schwierigkeit, mittels der bekannten, kleinteiligen Feststeller die Rückwand spielfrei fixieren zu können.

Der Erfindung liegt deshalb die Aufgabe zugrunde, einen Feststeller der eingangs genannten Art zu schaffen, der einfacher zu handhaben ist und mit dem beim Aufbau eines Kastenmöbels, insbesondere eines Mitnahme-Möbels, eine sicherere Fixierung der im Eckbereich jeweils unter einem Winkel von 90 Grad zueinander miteinander zu verbindenden Kastenmöbelelemente, nämlich der Rückwand, des Bodens oder des Oberbodens sowie der betreffenden Seitenwand, erreicht werden kann.

Diese Aufgabe wird bei einem Feststeller der weiter oben genannten Art nach der Erfindung durch die kennzeichnenden Merkmale des Patentanspruchs 1 gelöst.

Für die Erfindung ist wesentlich, daß der Eckwinkel mit den zumindest zwei darin integrierten Stützelementen ein größeres, einfacher zu handhabendes Teil ist, welches sich leicht rückwärtig an der Rückwand des betreffenden Kastenmöbels in die Ecke zwischen der Rückwand, dem jeweiligen Boden oder Oberboden und der benachbarten Seitenwand ansetzen und danach durch Einbringen der Fixierschrauben oder -nägel befestigen läßt. Dadurch wird zum einen die Rückwand mit dem Boden oder dem Oberboden, auch Deckel genannt, und zum zweiten die Rückwand mit der benachbarten Seitenwand fixiert, so daß auch die Seitenwand und der Boden relativ zueinander unter einem Winkel von 90 Grad festgelegt sind. Dies erleichtert den Aufbau von Mitnahme-Kastenmöbeln, der im Do-it-yourself-Verfahren erfolgen muß, erheblich. So erreicht man schon nach dem Zusammenfügen eines Bodens oder Oberbodens, einer Seitenwand und der in deren Nuten eingeführten Rückwand nach dem Anbringen des erfindungsgemäßen Feststellers im dadurch gebildeten Eckbereich des Kastenmöbels eine hohe Stabilität und Winkelgenauigkeit dieser drei Teile zueinander, die den Anbau der weiter zugehörigen Teile des Kastenmöbels erleichtert. In der Regel genügt es, im Bereich zweier einander diagonal gegenüberliegender Ecken der rechteckigen oder quadratischen Rückwand je einen Feststeller vorzusehen, um dem Kastenmöbel eine ausreichende Festigkeit zu verleihen.

Vorteilhafte Ausgestaltungsmerkmale der Erfindung ergeben sich aus den Unteransprüchen. Hiervon sind die federartigen Stege besonders zu erwähnen, die an den voneinander abliegenden Anschlagseiten der Schenkel des Eckwinkels nach außen vorstehend angeformt sind. Diese Stege haben eine solche Dicke, daß sie neben der Rückwand in die diese aufnehmenden Nuten des jeweiligen Bodens oder Oberbodens und der benachbarten Seitenwand eingeführt werden können, um das Spiel der Rückwand zu beseitigen, die - wie erwähnt - wegen der erforderlichen Toleranzen in der Regel gegenüber der Weite der sie aufnehmenden Nuten eine geringere Dicke aufweist.

Die Erfindung wird nachfolgend anhand der Zeichnung an einem Ausführungsbeispiel noch näher erläutert. Dabei zeigen:
- Fig. 1: die Seitansicht eines Feststellers,
- Fig. 2: die Draufsicht auf den Feststeller gemäß Fig. 1 mit der umkreisten Einzelheit in vergrößerter Darstellung,
- Fig. 3: eine perspektivische Darstellung des Feststellers nach den Figuren 1 und 2 und
- Fig. 4: eine perspektivische Darstellung der Einbaulage des Feststellers nach den vorangehenden Figuren.

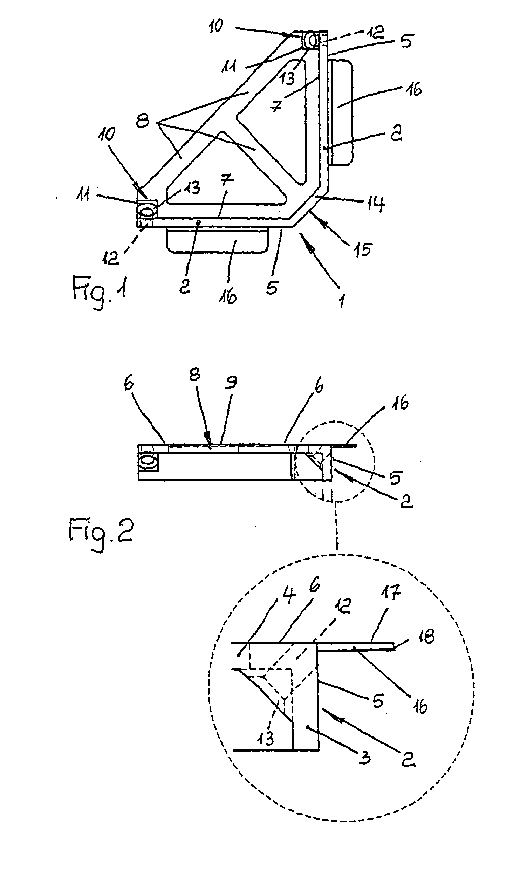

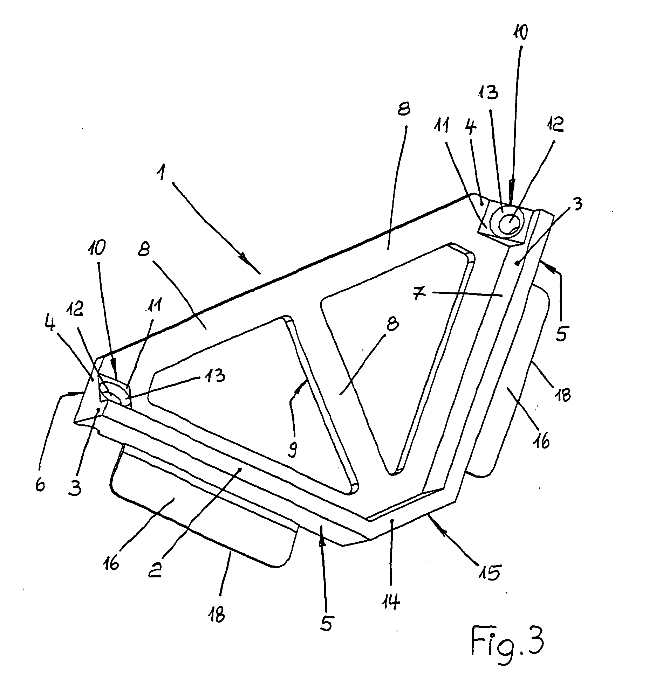

Im einzelnen zeigt Fig. 1 einen einstückigen Eckwinkel 1 mit zwei Schenkeln 2, die senkrecht zueinander stehen. Wie aus der vergrößerten Darstellung von Fig. 2 und der perspektivischen Wiedergabe von Fig. 3 hervorgeht, besteht jeder der beiden Schenkel 2 des Eckwinkels 1 aus einem Winkelprofil, welches jeweils aus zwei rechtwinklig zueinanderstehenden Stützstegen 3 und 4 gebildet ist. Diese Stützstege 3, 4 weisen nach außen hin jeweils ebene Anschlagseiten 5, 6 auf, die ebenfalls rechtwinklig zueinander verlaufen. Wie vor allem Fig. 3 deutlich macht, liegen die an den Stützstegen 3 der Schenkel 2 des Eckwinkels 1 ausgebildeten Anschlagseiten 5 voneinander ab und stehen unter einem Winkel von 90 Grad zueinander. Hingegen befinden sich die an den Stützstegen 4 der Schenkel 2 des Eckwinkels 1 vorhandenen Anschlagseiten 6 in einer gemeinsamen Ebene.

Die beiden Schenkel 2 des Eckwinkels 1 sind an ihren Innenseiten 7 mittels Versteifungsstegen 8 miteinander verbunden, an deren Stelle auch eine durchgehende Platte vorgesehen werden kann. Die Versteifungsstege 8 schließen an die Stützstege 4 an und haben die gleiche Dicke wie die Stützstege 4 der Schenkel 2. Die einen breiteren Außenseiten 9 der Versteifungsstege 8 liegen in einer gemeinsamen Ebene mit den Anschlagseiten 6 der Stützstege 4 der Schenkel 2, wie man vor allem der kleineren Darstellung von Fig. 2 entnimmt. Die Schenkel 2 haben an ihren freien Enden eine zu ihrer Längserstreckung rechtwinklig stehende Abschlußfläche, über welche die die Schenkel 2 verbindenden Versteifungsstege 8 des Eckwinkels 1 nicht vorstehen.

Weiter weisen die Schenkel 2 des Eckwinkels 1 an ihren freien Enden besonders ausgeformte Stützelemente 10 auf, die grundsätzlich unabhängig von der sonstigen Ausbildung der Schenkel 2 des Eckwinkels 1 für den beabsichtigten Einsatzzweck als Feststeller fungieren können. In bevorzugter Ausführung sind sie jedoch entsprechend der zeichnerischen Darstellung in die Schenkel 2 des Eckwinkels 1 integriert und stehen mit ihrem inneren Endbereich in dem Zwickelraum, dem Inneneckenbereich, zwischen den Stützstegen 3, 4 der Stege 2 vor. So weisen die integrierten Stützelemente 10 eine rückwärtige Stirnfläche 11 auf, die sich im 45-Grad-Winkel zu den Stützstegen 3, 4 der Schenkel 2 erstreckt und mithin zur Diagonalebene der Innenecke zwischen den

Versteifungsstegen 8 und dem betreffenden Schenkel 2 senkrecht steht. In Richtung der Diagonalen der Innenecke zwischen den Stützstegen 3, 4 des jeweiligen Schenkels 2 ist ein Durchgangsloch 12 angeordnet, welches an der Stirnseite 11 des vorstehenden, verdickten Bereichs der Stützelemente 10 sich zu seiner Einstecköffnung 13 erweitert. Das Durchgangsloch 2 erstreckt sich bis zur äußeren Eckkante zwischen den Stützstegen 3, 4 der Schenkel 2 und dient zur Aufnahme eines Befestigungsmittels, worauf nachstehend noch eingegangen werden wird.

Die Schenkel 2 des Eckwinkels 1 gehen mittels eines Zwischensteges 14 ineinander über, dadurch ist im Scheitelbereich des Eckwinkels 1 eine äußere Abflachung 15 gebildet. Weiter sind an den Außenseiten der Schenkel 2 federartige Stege 16 an den Eckwinkel 1 angeformt, die eine ebene Längsseite 17 aufweisen, welche in einer gemeinsamen Ebene mit den Anschlagseiten 6 der Stützstege 4 der Schen-kel 2 sowie den Außenseiten 9 der die Schenkel 2 verbindenden Versteifungsstege 8 liegen. Zu den freien, parallel zur Längsrichtung der Schenkel 2 verlaufenden Längskanten 18 hin verjüngen sich die Federstege 16 keilförmig.

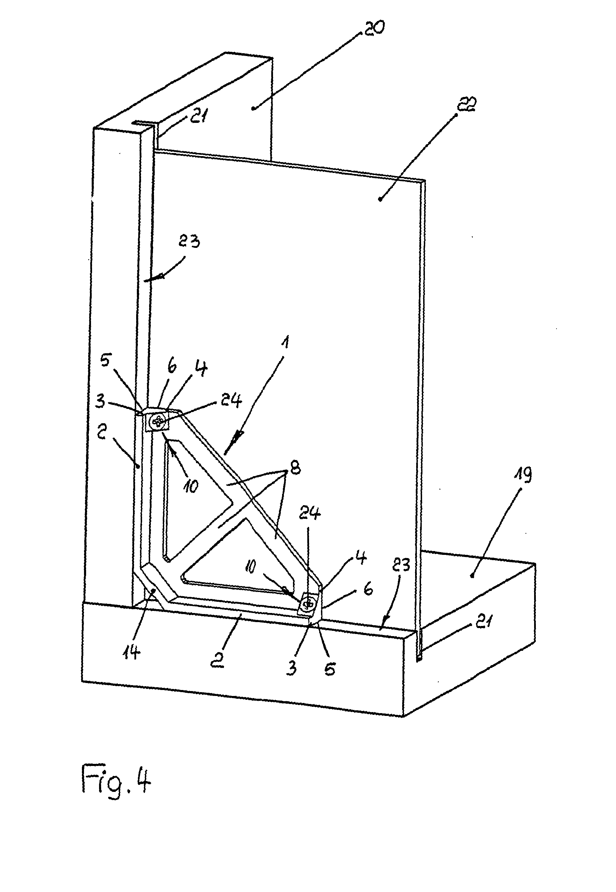

Fig. 4 veranschaulicht den Einsatzzweck eines Eckwinkels 1 der vorbeschriebenen Art, der als Feststeller bei Kastenmöbeln dient. Von einem solchen Kastenmöbel ist in Fig. 4 einer der unteren Eckbereiche wiedergegeben. So erkennt man hier einen Boden 19, nämlich einen sogenannten Unterboden, auf den rechtwinklig eine Seitenwand 20 des Kastenmöbels aufgesetzt ist. Der Boden 19 und die dazu unter einem rechten Winkel zu fixierende Seitenwand 20 weisen nahe ihren rückwärtigen Schmalseitenflächen parallel dazu eingelassene Nuten 21 auf, die beide miteinander in einer gemeinsamen Ebene verlaufen. So kann in diesen Nuten 21 eine rechteckige Rückwand 22 aufgenommen werden, die in der Regel eine etwas geringere Dicke relativ zu der Weite der Nuten 21 hat.

Von der Vorderseite des Kastenmöbels aus gesehen, befindet sich hinter der angesetzten, eingenuteten Rückwand 22 jeweils noch eine Brüstung 23 des Bodens 19 und der Wand 20. Auf diese Brüstungen 23 wird der als Feststeller dienende Eckwinkel 1 aufgesetzt, und zwar mit den unter einem Winkel von 90 Grad zueinander stehenden Anschlagseiten 5 seiner Schenkel 2. Dies geschieht in der Weise, daß die federartigen Stege 16 am Eckwinkel 2, die an beiden Schenkeln 2 nach außen vorstehen, neben der Rückwand 22 in die Nuten 21 des Bodens 19 und der Seitenwand 20 eingreifen. Aufgrund der Keilwirkung der federartigen Stege 16 wird im Bereich des Eckwinkels 1 die Rückwand 22 zugleich spielfrei in den Nuten 21 verspannt, wobei sich der Eckwinkel 1 mit den ebenengleichen Anschlagseiten 6 seiner Stege 2 sowie den ebenen Außenseiten 9 seiner Versteifungsstege 8 an die Rückwand 22 anlegt. Danach werden in die integrierten Stützelemente 10 der Schenkel 2, die somit insgesamt als Stützglieder wirken, je eine Schraube 24 durch die Durchgangsbohrung 12 hindurch bis in das Material der Rückwand 22 und des Bodens 19 bzw. der Seitenwand 20 hinein eingedreht. Dies kann nur exakt bei rechtwinkliger Ausrichtung des Bodens 19 und der Seitenwand 20 zueinander geschehen, die sowohl über den Eckwinkel 1 als auch über die eingenutete, fixierte Rückwand 22 zueinander winkelgenau stabilisiert werden.

## Patentansprüche

1. Feststeller für eingenutete Rückwände an Kastenmöbeln mit zumindest einem im Winkelbereich zwischen der Rückwand sowie einer genuteten Seitenwand und zumindest einem weiteren im Winkelbereich zwischen der Rückwand sowie einem genuteten Boden und/oder Oberboden ansetzbaren Stützelement, wobei die Stützelemente jeweils rechtwinklig zueinander stehende Anlageseiten und diagonal zu diesen Anlageseiten ein Durchgangsloch zur Aufnahme einer Fixierschraube oder eines Fixierstiftes aufweisen,
**dadurch gekennzeichnet,**
**daß** die zumindest zwei Stützelemente (10) einstückig in zwei im rechten Winkel zueinander stehende Schenkel (2) eines Eckwinkels (1) integriert sind, wobei an jedem der Schenkel (2) wenigstens eines der Stützelemente (10) ausgebildet ist.

2. Feststeller nach Anspruch 1,
**dadurch gekennzeichnet,**
**daß** die Schenkel (2) des Eckwinkels (1) einschließlich der Stützelemente (10) insgesamt als Stützglieder ausgebildet sind und an rechtwinklig zueinanderstehenden Stützstegen (3,4) jeweils zwei äußere, ebene Anschlagseiten (5, 6) als verlängerte Anlageseiten der Stützelemente (10) haben, wobei die an derselben Seite des Eckwinkels (1) befindlichen Anschlagseiten (6) beider Schenkel (2) in einer gemeinsamen Ebene miteinander liegen.

3. Feststeller nach Anspruch 1 oder 2,
**dadurch gekennzeichnet,**
**daß** der Eckwinkel (1) in seinem Scheitelbereich nach außen hin eine Abflachung (15) aufweist, in deren Bereich seine Schenkel (2) über einen geneigt zu den Schenkeln (2) verlaufenden Zwischensteg (14) aneinander anschließen.

4. Feststeller nach einem der Feststeller 1 - 3,
**dadurch gekennzeichnet,**
**daß** die Schenkel (2) des Eckwinkels (1) gleich lang sind und die Durchgangslöcher (12) der Stützelemente (10) an jedem der beiden Schenkel (2) in gleichen Abständen vom Scheitel des Eckwinkels (1) angeordnet sind.

5. Feststeller nach Anspruch 4,
**dadurch gekennzeichnet,**
**daß** die Durchgangslöcher (12) der Stützelemente (10) an den Enden der Schenkel (2) des Eckwinkels (1) angeordnet sind.

6. Feststeller nach einem der Ansprüche 1 - 5,
**dadurch gekennzeichnet,**
**daß** die Schenkel (2) im Innenbereich des Eckwinkels (1) mittels einstückig angeformter Versteifungsstege (8) miteinander verbunden sind.

7. Feststeller nach Anspruch 5,
**dadurch gekennzeichnet,**
**daß** die Versteifungsstege (8) des Eckwinkels (1) ebene Außenseiten (9) haben, die mit den beiden in einer gemeinsamen Ebene liegenden Anschlagseiten (6) der Schenkel (2) des Eckwinkels (1) ebenengleich sind.

8. Feststeller nach Anspruch 7,
**dadurch gekennzeichnet,**
**daß** die Versteifungsstege (8) an die Stützstege (4) mit den Anschlagseiten (6) anschließen.

9. Feststeller nach einem der Ansprüche 2 - 8,
**dadurch gekennzeichnet,**
**daß** an den Innenseiten (7) der Schenkel (2) des Eckwinkels (1) ein Endbereich der integrierten Stützelemente (10) vorstehend angeformt ist und eine zur Diagonalebene der Innenecke zwischen den Stützstegen (3, 4) der Schenkel (2) senkrecht stehende Stirnseite (11) hat, an der sich die Einstecköffnung (13) des jeweiligen Durchgangslochs
(12) befindet.

10. Feststeller nach einem der Ansprüche 2 - 9,
**dadurch gekennzeichnet,**
**daß** an den voneinander abliegenden Anschlagseiten (6) der Schenkel (2) des Eckwinkels (1) rechtwinklig vorstehende Stege (16) nach Art von Federn angeordnet sind, deren eine Längsseite (17) ebenengleich mit den in der gemeinsamen Ebene angeordneten zweiten Anschlagseiten (6) der Schenkel (2) des Eckwinkels (1) sind.

11. Feststeller nach Anspruch 10,
**dadurch gekennzeichnet,**
**daß** die federartigen Stege (16) sich keilartig zu ihrer freien Längskante (18) hin verjüngen.

12. Feststeller nach einem der Ansprüche 1 - 11,
**dadurch gekennzeichnet,**
**daß** der Eckwinkel (1) ein Kunststoff-Spritzgußteil ist.
